# EUROPÄISCHE PATENTANMELDUNG

(11) **EP 2 003 334 A1**
(43) Veröffentlichungstag der Anmeldung: **17.12.2008**
(21) Anmeldenummer: 07110070.5
(22) Anmeldetag: 12.06.2007
(51) Int. Cl.: F03D 7/02, F03D 11/00

(54) **Windkraftanlage**

(71) Anmelder: ICEC Holding AG, 6315 Morgarten (CH)
(72) Erfinder: Grob, Gustav R., 1227, Carouge (CH); Arbanas, Viktor, Baden 5400 (CH)
(74) Vertreter: OK pat AG

(57) **Zusammenfassung**

Windkraftanlage mit Gondel (20). Die Gondel (20) ist mit einer vertikalen Gondelwelle (12) verbunden. Die Gondelwelle (12) ist mittels einer Antriebsvorrichtung (66) um eine vertikale Achse (A) drehbar. Für die Lagerung der Gondelwelle (12) und damit der Gondel (20) sind eine axial wirkende Gleitlageranordnung (42/52) und eine radial wirkende Lageranordnung (50) vorgesehen.

## Beschreibung

Gegenstand der Erfindung ist eine Windkraftanlage nach dem Oberbegriff des Anspruchs 1.

Windkraftanlagen weisen üblicherweise einen Turm, meist aus Beton, auf. Am oberen Bereich des Turmes befindet sich eine so genannte Gondel, die im Allgemeinen durch ein geschlossenes Gehäuse gebildet ist. In oder an der Gondel ist ein windradartiger Rotor befestigt, der durch Wind antreibbar ist und der seinerseits eine ebenfalls mit der Gondel verbundene Generatorenanlage treibt, die elektrische Energie verfügbar macht. Im Weiteren sind in oder an der Gondel Mess- und Regelgeräte für den Betrieb der Windkraftanlage sowie vorzugsweise auch Mittel angebracht, die für die Montage, den Unterhalt und die Demontage der Aggregate der Windkraftanlage einsetzbar sind. Um eine optimale Effizienz der Windkraftanlage zu erhalten, muss der Rotor jeweils in den Wind gedreht sein, das heisst, er muss so verstellbar sein, dass er im Wesentlichen in einer Ebene senkrecht zur jeweiligen Anströmrichtung des Windes liegt. Der Rotor und mit ihm zusammen die Gondel und die Generatorenanordnung sind daher so ausgebildet, dass sie im Azimut, das heisst um eine im Wesentlichen vertikale Achse, rotierbar sind. Zu diesem Zwecke ist an der Gondel eine vertikale Gondelwelle befestigt. Zum Einstellen des Azimuts der um die vertikale Achse rotierbaren Bestandteile der Windkraftanlage ist die Gondelwelle mittels einer Antriebsvorrichtung um diese vertikale Achse drehbar bzw. üblicherweise aus einer Grundstellung in beiden Drehrichtungen um einen bestimmten maximalen Drehwinkel von zum Beispiel 720° schwenkbar. In der Windkraftanlage treten Kräfte auf, die einerseits durch den Wind und andererseits durch das Drehmoment des Generators erzeugt werden. Die Gondelwelle ist mittels eines Axiallagers, das im Wesentlichen das Gewicht der rotierbaren Bestandteile der Windkraftanlage aufzunehmen hat, gegen axiale Verschiebungen nach unten gesichert. Mittels einer Radiallageranordnung, die insbesondere Kräfte aufnimmt, welche durch ein vom anströmenden Wind verursachtes Drehmoment verursacht werden, ist die Gondelwelle gegen radiale Verschiebungen gesichert.

Herkömmlicherweise werden in Windkraftanlagen sowohl für die axiale wie auch für die radiale Lagerung der Gondelwelle Wälzlager eingesetzt. Diese sind aber unter mehreren Gesichtspunkten für die Lagerung der Gondelwellen ungeeignet.

Aufgabe der Erfindung ist es daher, eine Windkraftanlage der eingangs genannten Art mit einer verbesserten Lagerung mindestens in axialer Richtung für die Gondelwelle vorzuschlagen.

Die Lösung dieser Aufgabe erfolgt erfindungsgemäss durch die Merkmale des kennzeichnenden Teils des unabhängigen Anspruchs 1.

Bevorzugte Weiterbildungen der erfindungsgemässen Windkraftanlage sind durch die vom Anspruch 1 abhängigen Ansprüche 2 bis 15 definiert.

Erfindungsgemäss wird als axial wirkende Lageranordnung eine Gleitlageranordnung eingesetzt, um eine vertikale Abwärtsbewegung der Gondelwelle und der mit ihr rotierbaren Bestandteile der Windkraftanlage zu verhindern.

Gleitlager haben generell gegenüber den herkömmlicherweise eingesetzten Wälzlagern zahlreiche Vorteile, insbesondere sind die einzelnen Bestandteile von Gleitlageranordnungen, jedenfalls von Gleitlageranordnungen in der Grösse und Belastungsaufnahmefähigkeit, wie sie für die Lagerung der Gondelwellen, die im Wesentlichen nur kleine Korrektur- oder Verstellbewegungen machen, von Windkraftanlagen erforderlich sind, einfacher herzustellen, viel schneller lieferbar, die Abmessungen sind zudem geringer als die Abmessungen von Wälzlagern, so dass die Montage und der Transport insbesondere im Zusammenhang mit Gondeln, die beispielsweise durch übliche Normcontainer (z.B. ISO Container) gebildet sein können, problemlos ist. Auch im Betrieb bzw. im Hinblick auf den Unterhalt sind Gleitlager vorteilhafter und kostengünstiger als Wälzlager grosser Dimensionen, weil unter Anderem die Schmierung einfacher ist.

Vorzugsweise verwendet man auch für die radial wirkende Lageranordnung eine Gleitlageranordnung mit mindestens einem Radialgleitlager.

Wegen der beträchtlichen Abmessungen und vor Allem wegen der sehr hohen Beanspruchung, aber auch wegen der unterschiedlichen Deformationen und Dilatationen durch die starke Variation der mechanischen und thermischen Beanspruchungen ist es vorteilhaft, Gleitlageranordnungen mit segmentierten und dadurch einstellbaren Lagerkörpern bzw. Lagerschalen, wie sie allgemein für Lager grosser Dimensionen und hoher Beanspruchungen bekannt sind, vorzusehen.

Bei einem bevorzugten Ausführungsbeispiel ist die axial wirkende Lageranordnung ein Stirngleitlager, das eine ausschliesslich axial wirkende Lagerung bildet. Die radial wirkende Lageranordnung weist in diesem Fall üblicherweise zwei in axialer Richtung voneinander beabstandete und vorzugsweise einstellbare Radiallager auf, um Drehmomente aufnehmen zu können.

Bei einem besonders bevorzugten Ausführungsbeispiel besitzt die Gondelwelle ein nach unten konvexes, beispielsweise kalottenförmiges, Wellenende. In diesem Fall besitzt die axial wirkende Lageranordnung eine zum konvexen Wellenende komplementär geformte, nach oben konkave Lagerschale. Auf diese Art wird eine axial und radial wirkende kombinierte Lagerung mit einer Gleitlageranordnung gebildet, so dass für die radial wirkende Lageranordnung nur ein einziges Radiallager benötigt wird. Eine solche kombinierte Lagerung benötigt keine einstellbare Lagerschale, hingegen ist es sehr vorteilhaft, für das eine zusätzliche Radiallager, das benötigt wird, eine kippbare Lagerschale vorzusehen, um so ein einstellbares Lager zu erhalten.

Im Hinblick auf eine erforderliche Kabelführung ist die axial wirkende Lageranordnung vorzugsweise mit einem in Draufsicht ringförmigen Lagerkörper ausgebildet, das heisst, sie besitzt einen zentralen Durchbruch für das erwähnte Kabel. Auf die Probleme im Zusammenhang mit der Lagerung der Gondelwelle und der Kabelführung wird weiter unten eingegangen.

Die in der Windkraftanlage zur Lagerung der Gondelwelle eingesetzten Gleitlageranordnungen können selbstschmierend sein, wobei dann vorzugsweise von den Lagerflächen einerseits der Gondelwelle und anderseits der Lagerkörper mindestens eine Lagerfläche aus einem spezifischen geeigneten Material gefertigt und/oder mit einer Antihaftbeschichtung versehen ist.

Vorzugsweise sind die Lageranordnungen mit einer Schmiervorrichtung versehen. Hierbei kann die Schmiervorrichtung sowohl für die axial wirkende wie auch für die radial wirkende Lageranordnung eine Schmiermittelwanne umfassen, in welcher die entsprechende Lagerung eingetaucht ist. Um einen genügenden Schmiermitteldruck für eine hinreichende Schmierung zu gewährleisten, sollte das Niveau des Schmiermittels um eine gewisse Minimalhöhe oberhalb der Lageranordnungen liegen. Die Schmiervorrichtung kann auch eine oder mehrere Schmiermittelpumpen aufweisen, um das Schmiermittel unter Druck zu setzen. Je nach Ausführungsform kann aber auch eine Fettdauerschmierung vorgesehen werden, die keine Wartung erfordert.

Im Weiteren können Mittel, das heisst Heiz- und/oder Kühlvorrichtungen, vorhanden sind, um die Temperaturen der Lageranordnung(en) und insbesondere des Schmiermittels innerhalb eines vorbestimmbaren Temperaturbereiches zu halten. Der Temperaturbereich ist verhältnismässig weit, wobei je nach geographischem Standort der Windkraftanlage Tiefstemperaturen bei etwa -55°C und Höchsttemperaturen bei 60°C liegen können.

Die Antriebsvorrichtung für die Gondelwelle, die herkömmlicherweise über ein Zahnradgetriebe angetrieben wird, weist bei Windkraftanlagen der vorliegenden Erfindung vorzugsweise ein Umschlingungsmittel, z.B. einen Riementrieb oder eine Ketten- bzw. Seiltrieb, auf.

Um einen optimalen Wirkungsgrad der Windkraftanlage zu erhalten, wird der Rotor zusammen mit der Gondel jeweils um die vertikale Turmachse in den Wind gedreht. Der hierbei erforderliche Drehwinkel hängt unter Anderem von den lokalen Windverhältnissen ab. Im Allgemeinen sollten der Rotor und die Gondel bzw. alle rotierenden Bestandteile der Windkraftanlage aus einer Grundstellung in beiden Drehrichtungen um einen Azimut-Winkel von je etwa 360°, besser noch von je etwa 720° gedreht bzw. geschwenkt werden können. Üblicherweise erfolgt die Drehung bzw. Schwenkung auf Grund von Messergebnissen, und bei Windstille gelangen die rotierenden Bestandteile zurück in die Grundstellung. Bei diesen Drehungen bzw. Schwenkungen ergibt sich die Notwendigkeit, ein Kabel mit einem ersten Kabelende an einem rotierenden Bestandteil, beispielsweise einem Transformator, mit einem zweiten Kabelende an einem stationären Bestandteil der Windkraftanlage, beispielsweise am Turm, zu befestigen und es zwischen diesen beiden Befestigungsstelen in geeigneter Weise zu führen.

Für die Führung des Kabels, das von einem um die vertikale Achse rotierbaren Bestandteil zu einem ortsfesten Bestandteil der Windkraftanlage verläuft, kann vorgesehen sein, dass ein Kabelkanal in der Gondelwelle einen Axialbereich und einen anschliessenden, im wesentlichen quer dazu verlaufenden Radialbereich umfasst. Bei dieser Anordnung ist ein Kabelwickelbereich, meist oberhalb der axial wirkenden Gleitlageranordnung, vorgesehen. Der Radialbereich des Kabelkanals weist einen an den Radialbereich des Kabelkanals anschliessenden, mindestens annähernd konzentrisch um die Gondelwelle angeordneten ringartigen Kabelträger oder Kabelkorb auf. Umfangs- und Radialabmessungen des Kabelträgers oder Kabelkorbes sind so, dass von dem Kabel eine Kabellänge aufwickelbar ist, die sich aus dem Azimut-Winkel ergibt, um den die Gondel hin- und her schwenkbar ist.

In einer anderen Ausführungsform kann das Kabel von einem rotierbaren Bereich in einem ausschliesslich axialen, zentrischen, vertikalen Kabelkanal der Gondelwelle abwärts und von seinem Austritt aus dem Kabelkanal innerhalb des Turmes mindestens annähernd vertikal weiter nach unten zu einer ortsfesten Befestigungsstelle geführt werden. Das Kabel wird dann zwar bei einer Drehung der Gondelwelle tordiert, doch ist diese Tordierung wegen der grossen Höhe des Turmes und damit der grossen Länge des Kabels akzeptabel.

Eine solche Anordnung hat den Vorteil, dass kein Kabelwickelbereich und keine aufwickelbare zusätzliche Kabellänge notwendig sind. Die Lagerflächen des axial wirkenden Gleitlagers sind hierbei nicht bis in ihr Zentrum nutzbar, was aber bei Stirngleitlagern ohnehin häufig der Fall ist. Der in Draufsicht üblicherweise kreisförmige Kabelkanal in der Gondelwelle und ein entsprechende kreisförmiger zentraler Durchbruch im Lagerkörper müssen für das Kabel frei bleiben. Die Lagerfläche ist somit, in Draufsicht, im Wesentlichen kreisringförmig. Ist eine Schmierung vorgesehen, bei der die Lagerung in eine Schmiermittelwanne eingetaucht ist, so muss entsprechend der Schmiermittelbereich der Schmiermittelwanne die Form eines Kreisringzylinders aufweisen. Bei einer Schmierung mit Schmiermittel, das mittels einer Schmiermittelpumpe unter Druck gebracht wird, muss die kreisringförmige Lagerfläche einen Innenrand aufweisen, um zu verhindern, dass das Schmiermittel entlang des Kabels nach unten leckt.

Weitere Einzelheiten und Vorzüge der Erfindung werden im Folgenden an Hand eines Ausführungsbeispiel und mit Bezug auf die Zeichnung beschrieben. Die Figuren sind schematisiert und im Allgemeinen nicht massstäblich. Es zeigen:
- **Fig. 1A**: eine Windkraftanlage nach der Erfindung, in stark vereinfachter Darstellung, von der Seite;
- **Fig. 1B**: eine weitere Windkraftanlage nach der Erfindung, in gleicher Darstellung wie Fig. 1A;
- **Fig. 2A**: eine Gondelwelle einer Windkraftanlage, gelagert in einem Stirngleitlager und zwei Radialgleitlagern, in stark vereinfachter, schematisierter Darstellung, von der Seite;
- **Fig. 2B**: eine Gondelwelle einer Windkraftanlage, gelagert in einem kombinierten, axial und radial wirkenden Gleitlager und einem Radialgleitlager, in gleicher Darstellung wie Fig. 2A;
- **Fig. 2C**: eine Gondelwelle einer Windkraftanlage, gelagert in einem ringförmigen Stirngleitlager und zwei Radialgleitlagern, in stark vereinfachter, schematisierter Darstellung, von der Seite;
- **Fig. 3**: den Verbindungsbereich der Gondel und der Gondelwelle einer Windkraftanlage, mit weiteren konstruktiven Elementen, von der Seite;
- **Fig. 4A**: Gondel und Gondelwelle einer Windkraftanlage, mit einem zwischen einem rotierenden und einem stationären Bestandteil der Windkraftanlage verlaufenden Kabel, von der Seite; und
- **Fig. 4B**: Gondel und Gondelwelle einer Windkraftanlage, mit einer Variante für die Führung eines Kabels zwischen einem rotierenden und einem stationären Bestandteil der Windkraftanlage, in gleicher Darstellung wie Fig. 4A.

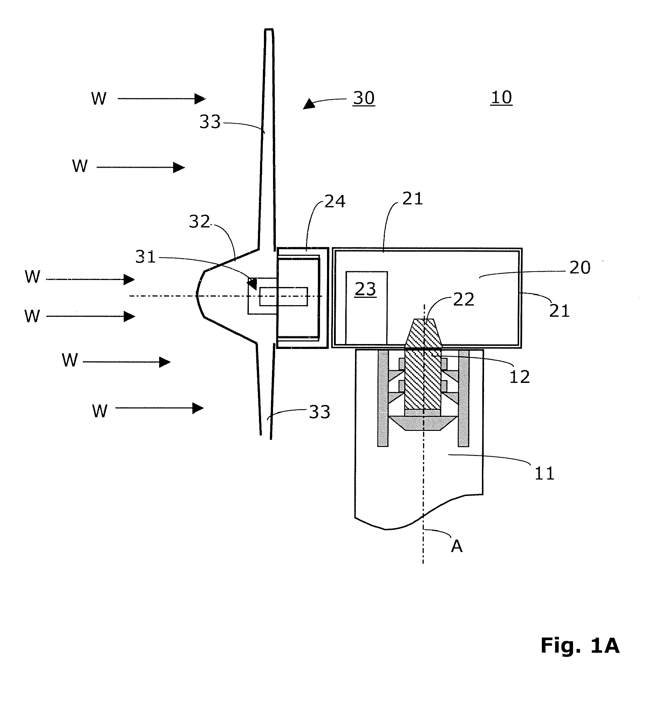

Fig. 1A zeigt ein Windkraftwerk 10 mit einem vertikalen Turm 11, in dem eine Gondelwelle 12 um eine vertikale Achse A drehbar gelagert ist. Am oberen Ende des Turms 11 befindet sich eine mit der Gondelwelle 12 verbundene Gondel 20. Die in Fig. 1A gezeigte Gondel 20 weist eine Rahmenstruktur 21 auf, die durch flächige Verkleidungen zu einer Art Kasten ergänzt wird. Die Gondel 20 kann aber auch anders, beispielsweise aerodynamisch günstiger, ausgebildet sein. Mit der Gondel 20 sind verschiedene Elemente und Aggregate verbunden, zum Beispiel eine Verbindungsstruktur 22 für die Verbindung von Gondel und Gondelwelle, ein Steuerschrank 23, eine Generatorenanlage 24, sowie ein Rotorteil 30 mit einer Nabe 31 mit einem rotierbaren Rotor 32, der mit Rotorflügeln 33 (hier als Windflügel bezeichnet) bestückt ist, die von Wind W beaufschlagt und in Drehung versetzt werden. Die Verbindungsstruktur 22 ist bei diesem Ausführungsbeispiel in die Gondel 20 integriert und dient, wie erwähnt, im Wesentlichen dazu, die Gondelwelle 12 mit der Gondel 20 bzw. mit deren Rahmenstruktur 21 zu verbinden.

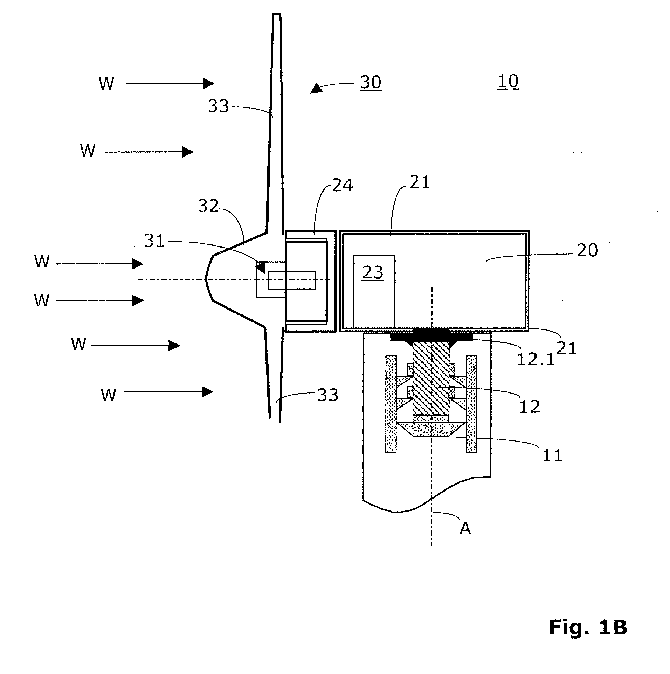

Fig. 1B zeigt eine andere Möglichkeit für die Verbindung der Gondelwelle 12 mit der Gondel 20. Hierbei ist an der Gondelwelle 12 ein Flansch 12.1 angebracht, beispielsweise angeschweisst. Der Flansch 12.1 ist mittels nicht dargestellter Verbindungsmittel, zum Beispiel Schrauben, mit der Gondel 20 verschraubt.

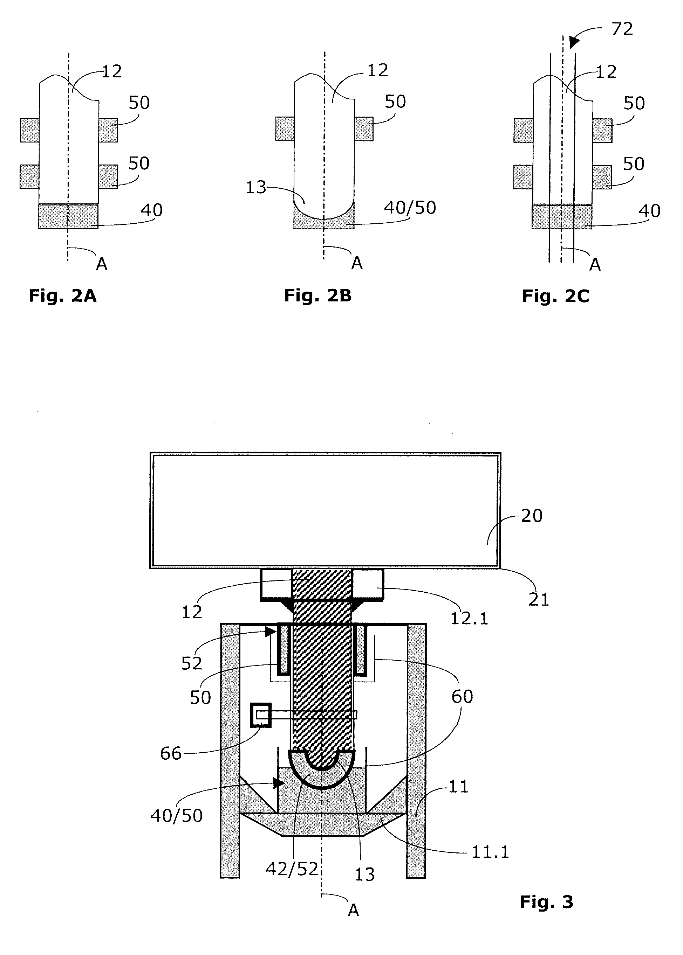

Fig. 2A zeigt den unteren Bereich der Gondelwelle 12, eine axial wirkende Gleitlageranordnung 40 in Form eines Stirngleitlagers und eine radial wirkende Gleitlageranordnung 50 mit zwei Radialgleitlagern. Das Stirngleitlager 40 verhindert eine Abwärtsbewegung der Gondelwelle 12 und damit der Gondel 20 sowie der an der Gondel 20 befestigten Aggregate. Die Radialgleitlager 50 verhindern seitliche Bewegungen der Gondelwelle 12 und der Gondel 20 sowie der an der Gondel befestigten Elemente und Aggregate.

Fig. 2B zeigt schematisch den unteren Bereich der Gondelwelle 12 mit einem von unten gesehen konvexen Wellenende, eine kombinierte Gleitlageranordnung 40/50, welche axial und radial wirkt, sowie das zweite Radialgleitlager 50.

Fig. 2C zeigt schematisch den unteren Bereich der Gondelwelle 12 mit einem zentralen Kabelkanal 72 und einem in Draufsicht kreisringförmigen axial wirkenden Gleitlager 40.

Fig. 3 zeigt als ortsfeste Bestandteile der Windkraftanlage 10 den obersten Bereich des Turms 11 mit einer Trägerstruktur 11.1, an bzw. auf welcher die Lagerschale 52 des einzigen Radialgleitlagers 50 und eine Lagerschale 42/52 der axial und radial wirkenden Gleitlageranordnung 40/50 abgestützt ist. Die Lagerschale 42/52 ist von oben gesehen konkav.

Beide Lagerungen bzw. die Lagerschalen 42/52 und 52 sind in je einer Schmiermittelwanne 60 eingetaucht. Es sind auch andere Varianten für die Schmierung der Gleitlageranordnungen möglich, insbesondere Schmierungen mit Pumpen, um das Schmiermittel unter Druck zu setzen.

Im Weiteren zeigt Fig. 3 als rotierbare Bestandteile der Windkraftanlage 10 die Gondel 20 mit der Gondelwelle 12 und dem Flansch 12.1. Das untere Wellenende 13 der Gondelwelle 12 ist von unten gesehen konvex, beispielsweise kugelkalottenförmig.

Die Gondelwelle 12 ist mittels eines Antriebs 66, im vorliegenden Fall eines Riementriebes, um die Achse A rotierbar.

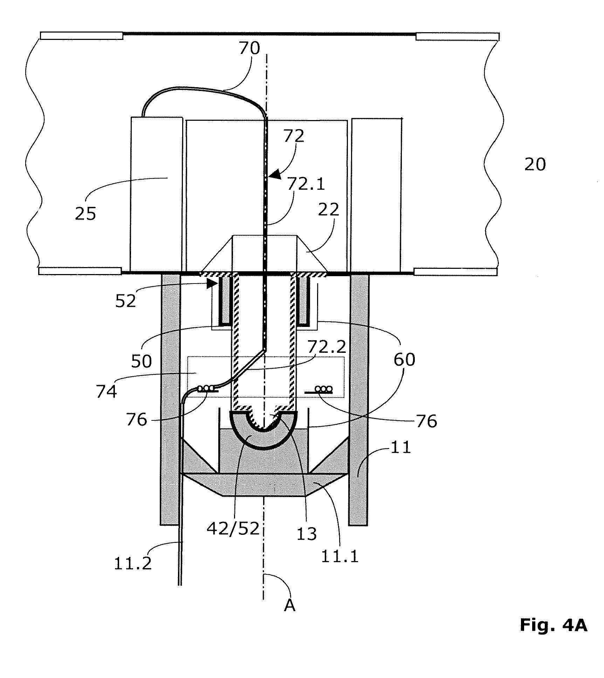

Fig. 4A zeigt im Wesentlichen die gleichen Bestandteile der Windkraftanlage 10 wie Fig. 3. Die mit Fig. 3 baugleichen oder ähnlichen Teile sind daher nicht nochmals beschrieben. In Fig. 4A fehlt der in Fig. 3 gezeigte Riementrieb und die Gondel 20 ist nur teilweise gezeigt. Dagegen sind zusätzliche Bestandteile der Windkraftanlage 10 gezeigt, insbesondere ein Kabel bzw. Hochspannungskabel 70, das vom rotierbaren Transformator 25 in der Gondel 20 zu einer ortsfesten Befestigungsstelle 11.2 an einer Innenwand des Turms 11 verläuft. Das Kabel 70 ist durch einen Kabelkanal 72 in der Gondelwelle 12 geführt. Der Kabelkanal 72 weist einen zentralen Axialbereich 72.1 im Bereich der Achse A der Gondelwelle 12 auf, an den sich ein etwa radial verlaufender Radialbereich 72.2 anschliesst. Vom Radialbereich 72.2 gelangt das Kabel 70 in einen Kabelwickelbereich 74, in dem ein Kabelträger 76 angeordnet ist. Der Kabelträger 76 weist eine ringförmige Platte oder Gitter auf, auf der das Kabel 70 liegt bzw. zu liegen kommt. Die radialen Abmessungen und der Umfang des Kabelträgers 76 sind so gewählt, dass sie genügen, um vom Kabel 70 eine Länge aufzunehmen, die sich bei einer Rotation der Gondelwelle 12 um den erforderlichen Winkel, beispielsweise 720°, entspricht.

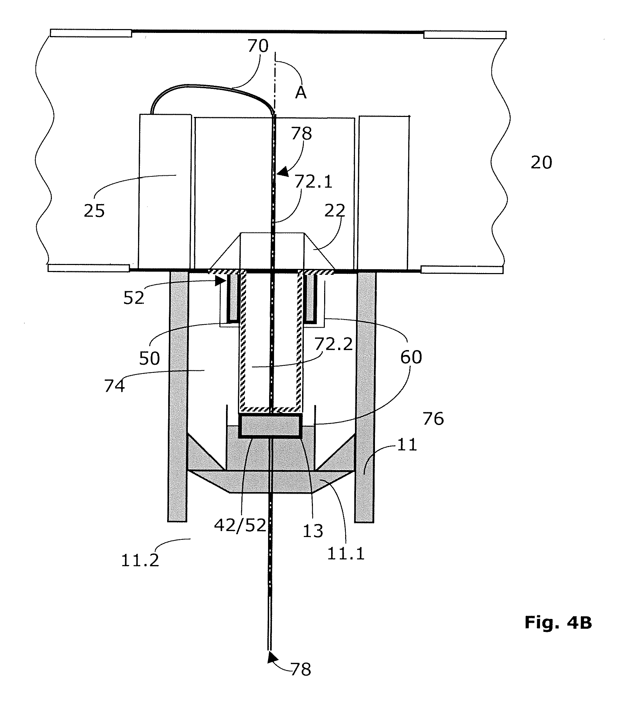

Fig. 4B zeigt eine annähernd gleiche Anordnung wie Fig. 4A, mit folgenden Unterschieden: Erstens ist an Stelle der axial und radial wirkenden Gleitlageranordnung 42/52 der Fig. 4A ein axial wirkendes Stirngleitlager 42/52 vorgesehen. Zweitens weist die Gondelwelle 12 einen zentralen vertikalen Kabelkanal 78 auf, der sich über die gesamte axiale Länge bzw. Höhe der Gondelwelle 12 erstreckt. Das Kabel 70 ist mit dem ersten Kabelende am Transformator 25 befestigt, läuft dann durch den Kabelkanal 78 und weiter, mindestens annähernd vertikal abwärts, um weiter unten, etwa in der Mitte oder im unteren Bereich des Turmes 11, in nicht dargestellter Weise befestigt zu werden.

Gemäss einer weiteren Ausführungsform der Erfindung, wird das bisher beschriebene neuartige Lagerkonzept um 180 Grad gedreht eingebaut. In diesem Fall ist im Deckenbereich der Gondel 20 ein kalottenförmiger Wellenstumpf vorgesehen, dessen Wellenachse sich vertikal nach unten erstreckt. Diese Wellenachse fällt mit der Achse A zusammen. Der Wellenstumpf ist in einem komplementär ausgebildeten Lagerbett gelagert. Dieses Lagerbett stützt sich auf dem oberen Endbereich des Turms 11 ab. Im Lagerbett ist ein axial wirkendes Gleitlager angeordnet. Zusätzlich zu dieser Lagerung ist mindestens ein Radiallager am Wellenstumpf vorgesehen, um Radialkräfte aufnehmen zu können.

## Patentansprüche

1. Windkraftanlage (10) mit einer Gondel (20), an der eine vertikale Gondelwelle (12) befestigt ist, die
- mittels einer Antriebsvorrichtung (66) um eine vertikale Achse (A) drehbar,
- mittels einer axial wirkenden Lageranordnung gegen eine Abwärtsbewegung und
- mittels einer radial wirkenden Lageranordnung gelagert ist,
**dadurch gekennzeichnet,**
**dass** die axial wirkende Lageranordnung ein axial wirkendes Gleitlager (40; 40/50) umfasst.

2. Windkraftanlage (10) nach Anspruch 1,
**dadurch gekennzeichnet,**
**dass** die radial wirkende Lageranordnung eine Gleitlageranordnung mit mindestens einem radial wirkenden Gleitlager (50) umfasst.

3. Windkraftanlage (10) nach Anspruch 2,
**dadurch gekennzeichnet,**
**dass** die axial wirkende Gleitlageranordnung (40, 40/50) und/oder die radial wirkende Gleitlageranordnung (50) einstellbare Lagerkörper (42, 52) umfassen.

4. Windkraftanlage (10) nach Anspruch 1,
**dadurch gekennzeichnet,**
- **dass** die axial wirkende Gleitlageranordnung (40) ein Stirngleitlager ist, und
- **dass** die radial wirkende Lageranordnung zwei in axialer Richtung voneinander beabstandete Radiallager (50) aufweist.

5. Windkraftanlage (10) nach Anspruch 1,
**dadurch gekennzeichnet,**
- **dass** die Gondelwelle (12) ein nach unten konvexes, beispielsweise kalottenförmiges, Wellenende (13) aufweist,
- **dass** die axial wirkende Gleitlageranordnung (40/50) eine zum konvexen Wellenende komplementär geformte, nach oben konkaven Lagerkörper (42/52) aufweist, um ein axial und radial zu wirken, und
- **dass** die radial wirkende Lageranordnung durch ein einziges Radiallager (50) gebildet ist.

6. Windkraftanlage (10) nach Anspruch 2,
**dadurch gekennzeichnet,**
**dass** die axial wirkende Gleitlageranordnung (40, 40/50) und/oder die radial wirkende Gleitlageranordnung (50) eine Schmiervorrichtung (60) aufweisen, um sie mit einem geeigneten Schmiermittel zu versorgen.

7. Windkraftanlage (10) nach Anspruch 6,
**dadurch gekennzeichnet,**
**dass** die Schmiervorrichtung Schmiermittelwannen (60) umfasst, in welcher die Gleitlageranordnungen (40, 40/50, 50) eingetaucht sind.

8. Windkraftanlage (10) nach Anspruch 6,
**dadurch gekennzeichnet,**
**dass** die Schmiervorrichtung eine Pumpeneinrichtung aufweist, um das Schmiermittel unter Druck zu setzen.

9. Windkraftanlage (10) nach Anspruch 1,
**dadurch gekennzeichnet,**
**dass** Mittel vorhanden sind, um die Temperatur mindestens einer der Lageranordnungen (40, 40/50, 50) innerhalb eines vorbestimmbaren Temperaturbereiches zu halten.

10. Windkraftanlage (10) nach Anspruch 1,
**dadurch gekennzeichnet,**
**dass** die Antriebsvorrichtung (65) ein Umschlingungsmittel, vorzugsweise einen Riementrieb umfasst.

11. Windkraftanlage (10) nach Anspruch 1,
**dadurch gekennzeichnet,**
**dass** Mittel vorhanden sind, um die aus einer Grundstellung in entgegengesetzten Richtungen durchführbare Rotation der Gondel (20) um die Achse (A) auf einen vorbestimmbaren Azimut-Winkel, beispielsweise 360°, zu begrenzen.

12. Windkraftanlage (10) nach Anspruch 11,
**dadurch gekennzeichnet,**
**dass** die Gondelwelle (12) einen Weg für ein Kabel (70) aufweist, das sich von einem mit der Gondel (20) rotierbaren Teil, insbesondere dem Transformator (23), über einen Kabelkanal (72) und einen Kabelwickelbereich (74) zu einem ortsfesten Teil, beispielsweise einer Befestigungsstelle (11.2) an einer Innenwand des Turms (11), erstreckt, wobei
- der Kabelkanal (72) in der Gondelwelle (12)
i. einen Axialbereich (72.1) im Bereich der Achse (A) und
ii. einen damit kommunizierenden, im wesentlichen radialen Radialbereich (72.2) umfasst, und wobei
- der Kabelwickelbereich (74)
i. oberhalb der axial wirkenden Gleitlageranordnung (40, 40/50) angeordnet ist, und
ii. einen dem Radialbereich (72.2) des Kabelkanals (72) benachbarten, mindestens annähernd konzentrisch um die Gondelwelle (12) angeordneten ringartigen Kabelträger (76) aufweist, dessen Umfangs- und Radialabmessungen so sind, dass von dem Kabel (70) eine Kabellänge aufwickelbar ist, die mindestens dem zweifachen Umfang des Kabelträgers (76) entspricht.

13. Windkraftanlage (10) nach Anspruch 12,
**dadurch gekennzeichnet,**
**dass** die Gondelwelle (12) einen Weg für ein Kabel (70) aufweist, das sich von einem mit der Gondel (20) rotierbaren Teil, insbesondere dem Transformator (23), über einen Kabelkanal (78) zu einem ortsfesten Teil, beispielsweise einer Befestigungsstelle (11.2) an einer Innenwand des Turms (11), erstreckt, wobei der Kabelkanal (78) durch fluchtende vertikale zentrale Durchbrüche in der Gondelwelle (12) und in der Lagerschale (42, 42/52) der axial oder axial und radial wirkenden Lageranordnung (40,40/50) erstreckt

14. Windkraftanlage (10) nach Anspruch 1,
**dadurch gekennzeichnet,**
**dass** die Gondelwelle (12) über eine in der Gondel (20) integrierte Verbindungsstruktur (22) mit der Gondel (20) verbunden ist.

15. Windkraftanlage (10) nach Anspruch 1,
**dadurch gekennzeichnet,**
**dass** die Gondelwelle (12) in ihrem oberen Endbereich an einem Flansch (12.1) befestigt ist, der mit der Gondel (20) verbunden, beispielsweise verschraubt, ist.
